# EUROPÄISCHE PATENTSCHRIFT

(11) **EP 4 078 414 B1**
(45) Veröffentlichungstag und Bekanntmachung des Hinweises auf die Patenterteilung: **13.09.2023**
(21) Anmeldenummer: 20817291.6
(22) Anmeldetag: 01.12.2020
(51) Int. Cl.: G06F 21/52, G05B 19/05

(54) **ÜBERWACHUNGSEINHEIT UND VERFAHREN ZUR ÜBERWACHUNG DER VON TREIBERN EINER GERÄTEZUGRIFFSEINRICHTUNG BELEGTEN RESSOURCEN**
MONITORING UNIT AND METHOD FOR MONITORING THE RESOURCES BEING USED BY DRIVERS OF A DEVICE ACCESS DEVICE
UNITÉ DE SURVEILLANCE ET PROCÉDÉ DE SURVEILLANCE DES RESSOURCES UTILISÉES PAR DES PILOTES D'UN DISPOSITIF D'ACCÈS À UN DISPOSITIF

(30) Priorität: 19.12.2019 DE 102019135293
(43) Veröffentlichungstag der Anmeldung: 26.10.2022
(73) Patentinhaber: Endress+Hauser Process Solutions AG, 4153 Reinach (CH)
(72) Erfinder: MAYER, Michael, 4104 Oberwil (CH); HÖFERLIN, Wolfgang, 79588 Efringen-Kirchen (DE)
(74) Vertreter: Trenkle, Dennis
(86) Internationale Anmeldenummer: PCT/EP2020/084087
(87) Internationale Veröffentlichungsnummer: WO 2021/121963

(56) Entgegenhaltungen:
- DE-A1-102016 125 171
- US-A1- 2008 263 324

## Beschreibung

Die Erfindung betrifft eine Gerätezugriffseinrichtung für den Zugriff auf Feldbuskomponenten eines Feldbussystems. Des Weiteren betrifft die Erfindung ein System der Automatisierungstechnik. Außerdem betrifft die Erfindung ein Verfahren zum Überwachen des Betriebs einer Gerätezugriffseinrichtung.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Für den Zugriff auf Feldbuskomponenten eines Feldbussystems wird eine Vielzahl von Treibern benötigt, die in eine Rahmenapplikation eingebunden ist. Diese Treiber werden in der Regel von den Herstellern der Feldbuskomponenten mitgeliefert. Es hat sich herausgestellt, dass die von den Herstellern gelieferten Treiber von unterschiedlicher softwaretechnischer Qualität sind und während des Betriebs Probleme verursachen können, was bis hin zu einem Systemabsturz führen kann.

Es ist Aufgabe der Erfindung, einen langfristig stabilen Betrieb einer Gerätezugriffseinrichtung zu ermöglichen.

In der DE 10 2016 125171 A1 ist eine beispielhafte Anwendung für eine Rahmenapplikation mit in der Rahmenapplikation eingebundenen Gerätetreibern offenbart.

Die US 2008/263324 offenbart ein Energieverwaltungssystem, welches ein Gerätetreibermodul umfasst, welches Gerätetreiber für angeschlossene Gerätehardware enthält und mittels welchem Gerätetreibermodul unter anderem der Gerätestatus der Gerätehardware überwacht wird.

Gelöst wird diese Aufgabe durch die in den Ansprüchen 1, 13 und 14 angegebenen Merkmale.

Vorteilhafte Weiterentwicklungen der Erfindung sind in den Unteransprüchen angegeben.

Eine Gerätezugriffseinrichtung entsprechend den Ausführungsformen der vorliegenden Erfindung dient zum Zugriff auf Feldbuskomponenten eines Feldbussystems. Die Gerätezugriffseinrichtung ist auf einem Host oder einer Hostumgebung installiert und umfasst eine Rahmenapplikation und mindestens einen in die Rahmenapplikation eingebundenen Treiber, der dazu ausgelegt ist, auf mindestens eine Feldbuskomponente zuzugreifen. Die Gerätezugriffseinrichtung weist eine Überwachungseinheit auf, die dazu ausgelegt ist, Informationen zu von den Treibern belegten Ressourcen, die vom Betriebssystem des Hosts oder der Hostumgebung bereitgestellt werden, zu erfassen und bei Erkennen eines regelwidrigen zeitlichen Anstiegs der von den Treibern belegten Ressourcen mindestens eine vorbestimmte Gegenmaßnahme zu veranlassen.

In eine Rahmenapplikation ist in der Regel eine Vielzahl von unterschiedlichen Treibern eingebunden, wobei mittels dieser Treiber auf die Feldbuskomponenten des Feldbussystems zugegriffen werden kann. Mittels dieser Treiber können Feldbuskomponenten konfiguriert und parametriert werden, darüber ist beispielsweise eine Überwachung des Gerätezustands möglich. Für jede Feldbuskomponente des Feldbussystems ist im Regelfall ein eigener Treiber vorgesehen, der in der Regel von dem Hersteller der Feldbuskomponente mitgeliefert wird. Dies führt dazu, dass in die Rahmenapplikation in der Regel Treiber von unterschiedlichen Herstellern eingebunden sind. Es hat sich herausgestellt, dass nicht alle der von den Herstellern der Feldbuskomponenten gelieferten Treiber den üblichen programmiertechnischen Qualitätsstandards genügen. Es hat sich gezeigt, dass es insbesondere dann zu Problemen kommt, wenn ein Treiber vom Betriebssystem bereitgestellte Ressourcen belegt, diese Ressourcen jedoch nach ihrer Verwendung nicht wieder freigibt. Bei derartigen von den Treibern beanspruchten Ressourcen kann es sich beispielsweise um Speicherplatz, Handles, Threads oder Netzwerkverbindungen sowie um weitere vom Betriebssystem des Hosts oder der Hostumgebung zur Verfügung gestellte Ressourcen handeln. Wenn derartige Ressourcen nach ihrer Verwendung nicht wieder freigegeben werden, kommt es zu einem regelwidrigen Anstieg der von dem Treiber beanspruchten Ressourcen. Unter einem regelwidrigen Anstieg ist insbesondere beispielsweise ein infolge von Nichtbeachtung üblicher programmiertechnischer Standards verursachter Anstieg der belegten Ressourcen zu verstehen. Dies kann zu einer Performancebeeinträchtigung, insbesondere zu einer Verlangsamung des Betriebs der Gerätezugriffseinrichtung führen. Darüber hinaus kann die stetig zunehmende Ressourcenbeanspruchung auch einen Absturz des Betriebssystems des Hosts oder der Hostumgebung hervorrufen.

Um derartige Probleme frühzeitig zu erkennen, wird vorgeschlagen, auf Seiten der Gerätezugriffseinrichtung eine Überwachungseinheit vorzusehen, die die von den Treibern beanspruchten Ressourcen überwacht. Hierzu kann die Überwachungseinheit beispielsweise dazu ausgelegt sein, Parameter, welche die Ressourcenbelegung widerspiegeln, vom Betriebssystem des Hosts oder der Hostumgebung abzurufen und in ihrem zeitlichen Verlauf zu verfolgen. Wenn die Überwachungseinheit einen regelwidrigen Anstieg der von den Treibern belegten Ressourcen erkennt, kann die Überwachungseinheit geeignete Gegenmaßnahmen veranlassen. Beispielsweise kann die Überwachungseinheit den Benutzer über das Problem informieren, eine Supporteinrichtung kontaktieren, eine Neuinstallation des Treibers beziehungsweise einer aktualisierten Version des Treibers veranlassen, einen Neustart des Hosts oder der Hostumgebung initiieren, einen Speicherdump durchführen, etc. Durch die von der Überwachungseinheit initiierten Gegenmaßnahmen können Performancebeeinträchtigungen der Gerätezugriffseinrichtung sowie Systemabstürze verhindert werden. Dies erhöht die Akzeptanz beim Kunden. Darüber hinaus ist es möglich, softwaretechnisch mangelhaft programmierte Treiber zu erkennen und die Hersteller dieser Treiber zur Behebung dieser Probleme aufzufordern. Durch diese Maßnahmen wird die softwaretechnische Qualität der Gerätezugriffseinrichtung langfristig verbessert, so dass ein stabiler Betrieb der Gerätezugriffseinrichtung ermöglicht wird.

Ein System der Automatisierungstechnik entsprechend den Ausführungsformen der vorliegenden Erfindung umfasst ein Feldbussystem mit mindestens einer Feldbuskomponente sowie eine Gerätezugriffseinrichtung, welche auf einem Host oder einer Hostumgebung installiert ist. Die Gerätezugriffseinrichtung umfasst eine Rahmenapplikation und mindestens einen in die Rahmenapplikation eingebundenen Treiber, der dazu ausgelegt ist, auf mindestens eine Feldbuskomponente des Feldbussystems zuzugreifen. Das System weist eine Überwachungseinheit auf, die dazu ausgelegt ist, Informationen zu von den Treibern belegten Ressourcen, die vom Betriebssystem des Hosts oder der Hostumgebung bereitgestellt werden, zu erfassen und bei Erkennen eines regelwidrigen zeitlichen Anstiegs der von den Treibern belegten Ressourcen mindestens eine vorbestimmte Gegenmaßnahme zu veranlassen.

Ein Verfahren entsprechend den Ausführungsformen der Erfindung dient zum Überwachen des Betriebs einer Gerätezugriffseinrichtung, welche auf einem Host oder einer Hostumgebung installiert ist. Die Gerätezugriffseinrichtung ist dazu ausgelegt, auf Feldbuskomponenten eines Feldbussystems zuzugreifen. Die Gerätezugriffseinrichtung umfasst eine Rahmenapplikation und mindestens einen in die Rahmenapplikation eingebundenen Treiber, der dazu ausgelegt ist, auf mindestens eine Feldbuskomponente des Feldbussystems zuzugreifen. Das Verfahren umfasst das Erfassen von Informationen zu von den Treibern belegten Ressourcen, die vom Betriebssystem des Hosts oder der Hostumgebung bereitgestellt werden, das Auswerten des zeitlichen Verlaufs der von den Treibern belegten Ressourcen und, falls ein regelwidriger zeitlicher Anstieg der von den Treibern belegten Ressourcen ermittelt wird, das Veranlassen von mindestens einer vorbestimmten Gegenmaßnahme.

Nachfolgend ist die Erfindung anhand von in der Zeichnung dargestellten Ausführungsbeispielen näher erläutert. Es zeigen:
Fig. 1 die Struktur eines Feldbusnetzwerks und einer zugehörigen Gerätezugriffssoftware mit darin eingebundenen Treibers;
Fig. 2 eine schematische Darstellung einer Überwachungseinrichtung, welche dazu ausgelegt ist, von einer Debugging-Schnittstelle des Betriebssystems Informationen abzurufen; und
Fig. 3 eine Darstellung des zeitlichen Verlaufs des beanspruchten Speichers, welche im Mittel einen stetigen Anstieg zeigt.

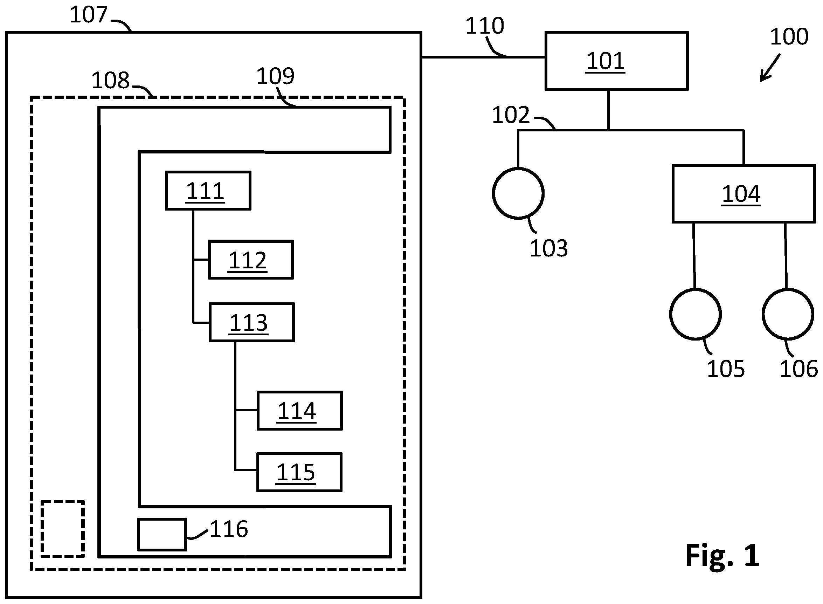

Fig. 1 zeigt ein Feldbusnetzwerk 100, das eine Mehrzahl von Feldgeräten und Gatewaygeräten umfasst. Auf der obersten Hierarchieebene des Feldbusnetzwerks 100 befindet sich ein Feldzugangsgerät 101. Das Feldzugangsgerät 101 ist zum Beispiel über ein PROFIBUS-Segment 102 mit einem Feldgerät 103 und einem Gatewaygerät 104 verbunden. Das PROFIBUS-Segment 102 ist über das Gatewaygerät 104 mit den HART-Feldgeräten 105 und 106 gekoppelt, wobei das Gatewaygerät 104 dazu ausgelegt ist, den Datenverkehr aus dem Protokoll PROFIBUS in das Protokoll HART umzusetzen und umgekehrt.

Die Parametrierung, Konfiguration und Zustandsüberwachung der Feldgeräte eines Feldbusnetzwerks erfolgt mittels einer auf einem Host 107 installierten Gerätezugriffssoftware 108, die eine Rahmenapplikation 109 umfasst. Der Host 107 ist über eine Ethernetverbindung 110 mit dem Feldbusnetzwerk 100 verbunden. Über die Gerätezugriffssoftware 108 kann auf die verschiedeneren Komponenten des Feldbusnetzwerks 100 zugegriffen werden. Insbesondere können von der Gerätezugriffssoftware 108 aus die Parameter der verschiedenen Komponenten des Feldbusnetzwerks 100 ausgelesen, dargestellt und verändert werden. Darüber hinaus ermöglicht die Gerätezugriffssoftware 108 eine Zustandsüberwachung (Condition Monitoring) der Komponenten des Feldbusnetzwerks 100. Der für diese Aufgaben erforderliche Datenaustausch wird in der Regel über den sogenannten azyklischen Datenverkehr abgewickelt.

Um die verschiedenen Komponenten des Feldbusnetzwerks 100 korrekt ansprechen zu können, benötigt die Rahmenapplikation 109 Informationen über die Eigenschaften und Parameter der Feldgeräte, Gateways, Remote I/Os etc. des Feldbusnetzwerks 100. Diese Informationen werden von den Herstellern der unterschiedlichen Geräte in der Regel in Form von Gerätetreibern oder Gerätebeschreibungsdateien zur Verfügung gestellt. Zur Gerätebeschreibung für den azyklischen Datenaustausch werden bei den Feldbusprotokollen PROFIBUS-DP, PROFIBUS-PA, FOUNDATION Fieldbus und HART Gerätebeschreibungen gemäß den Standards DTM (Device Type Manager), DD (Device Description), EDD (Enhanced Device Description) sowie FDI Device Packages verwendet. Insbesondere bei den Standards EDD und DTM werden zusätzlich zu Geräteparametern, Gerätefunktionalität und Adressraum-belegung auch Grafikfeatures und grafische Benutzeroberflächen spezifiziert, die die Parametrierung und Konfigurierung des jeweiligen Feldgeräts erleichtern sollen. Zur Erzeugung dieser grafischen Oberflächen sind im Standard EDD spezielle Grafikbefehle vorgesehen, die nach Art einer Interpreter-Sprache abgearbeitet werden.

Im Standard FDT/DTM werden die DTMs (Device Type Manager) in Form von dynamisch ladbaren Bibliotheken (DLLs) oder in Form von ausführbaren Dateien (Executables) zur Verfügung gestellt. Ein DTM umfasst auch die genannten Grafikfeatures. Die verschiedenen DTMs zu den verschiedenen Komponenten des Feldbusnetzwerks werden in eine gemeinsame FDT-Rahmenapplikation eingebunden, wobei FDT für "Field Device Tool" steht. Dadurch wird eine gemeinsame Rahmenapplikation zur Verfügung gestellt, in die die DTMs zu verschiedenen Geräten und von unterschiedlichen Herstellern eingebunden werden können. Der FDT-Standard wird in den nächsten Jahren zunehmend durch den Standard FDI Device Packages ergänzt und später eventuell ersetzt.

Neben den bisher diskutierten Feldbusprotokollen PROFIBUS, FOUNDATION Fieldbus und HART sind die sogenannten Industrial Ethernet-Protokolle zu nennen, zu denen u.a. die Feldbusprotokolle EtherNet/IP, PROFINET und EtherCAT gehören. Beim Feldbusprotokoll EtherNet/IP ist eine Gerätebeschreibungsdatei entsprechend dem Standard EDS (Electronic Data Sheet) zur Beschreibung sowohl des zyklischen als auch des azyklischen Datenaustauschs vorgesehen.

Im Beispiel von Fig. 1 umfasst die Gerätezugriffssoftware 108 vorzugsweise eine Rahmenapplikation 109 des Standards FDT (Field Device Tool), wobei in die Rahmenapplikation 109 unterschiedliche Treiber für die verschiedenen Geräte und Komponenten des Feldbusnetzwerks 100 eingebunden werden können. In eine FDT-Rahmenapplikation können beispielsweise unterschiedliche Device Type Manager (DTMs) von unterschiedlichen Herstellern eingebunden werden. Neben DTMs können auch anderer Gerätebeschreibungsdateien in die Rahmenapplikation 109 eingebunden werden. Dabei wird die hierarchische Struktur des Feldbusnetzwerks 100 innerhalb der Gerätezugriffssoftware 108 mithilfe von Treibern beziehungsweise Gerätebeschreibungsdateien nachgebildet, wobei die Anordnung der Treiber beziehungsweise Gerätebeschreibungsdateien dabei spiegelbildlich der Struktur des Feldbusnetzwerks 100 entspricht. Für den Zugriff auf die Komponenten des Feldbusnetzwerks 100 können in eine Rahmenapplikation 109 beispielsweise eine Anzahl von unterschiedlichen Geräte-DTMs, Gateway-DTMs und Kommunikations-DTMs eingebunden werden. An oberster Stelle der DTM-Hierarchie steht der Kommunikations-DTM 111. Der Kommunikations-DTM 111 ist dem Feldzugangsgerät 101 zugeordnet und kommuniziert mit diesem über die Ethernetverbindung 110. Der Kommunikation-DTM 111 stellt die Außenschnittstelle der Gerätezugriffssoftware 108 dar, wobei sämtlicher ein- und ausgehende Datenverkehr über den Kommunikations-DTM 111 geführt wird.

Der Geräte-DTM 112 ist in der DTM-Hierarchie unterhalb des Kommunikations-DTM 111 angeordnet. Der Geräte-DTM 112 bildet die Funktionalität des Feldgeräts 103 ab. In der Ebene unterhalb des Kommunikations-DTM 111 ist außerdem ein Gateway-DTM 113 angeordnet, der dem Gateway 104 zugeordnet ist. Über den Gateway-DTM 113 kann der Gateway 104 parametriert und konfiguriert werden. Unterhalb des Gateway-DTM 113 in der DTM-Hierarchie sind zwei Geräte-DTMs 114, 115 angeordnet. Über die Geräte-DTMs 114, 115 kann auf die Feldgeräte 105, 106 zugegriffen werden. Neben dem Standard FDT/DTM gibt es eine Vielzahl von alternativen Standards für die Gerätezugriffssoftware 108 und die darin eingebunden Gerätetreiber.

Basierend auf den von den DTMs abgerufenen Informationen zu den einzelnen Geräten kann die FDT-Rahmenapplikation dem Benutzer die hierarchische Struktur des Feldbusnetzwerks 100 grafisch darstellen, vorzugsweise in Form einer Baumstruktur.

Das Feldbusnetzwerk 100 kann beispielsweise Feldbuskomponenten von unterschiedlichen Herstellern umfassen. Der Hersteller einer Feldbuskomponente stellt in der Regel auch den zur jeweiligen Feldbuskomponente gehörigen Treiber bereit, so dass in die Rahmenapplikation 109 im Regelfall Treiber von unterschiedlichen Herstellern eingebunden sind. Es hat sich herausgestellt, dass die einzelnen Treiber von sehr unterschiedlicher softwaretechnischer Qualität sein können. Eine mangelhafte programmiertechnische Qualität eines Treibers liegt beispielsweise dann vor, wenn der Treiber vom Betriebssystem bereitgestellte Ressourcen beansprucht, die einmal belegten Ressourcen aber nach Verwendung nicht wieder ordnungsgemäß freigibt. Ein derartiges Verhalten führt zu einem stetig zunehmenden Ressourcenverbrauch dieses Treibers.

Bei den vom Betriebssystem bereitgestellten Ressourcen kann es sich beispielsweise um Speicherplatz, um Handles, um Threads oder um den vom Treiber ausgehenden Datenverkehr nach außen handeln. Diese Ressourcen werden vom Betriebssystem verwaltet, welches daher auch die Belegung und Freigabe dieser Ressourcen durchführt.

Ein erstes Beispiel für die vom Betriebssystem bereitgestellten Ressourcen ist Speicherplatz. Beispielsweise könnte der Treiber eine Tabelle umfassen, in die während des Betriebs neue Einträge hinzugefügt werden. Wenn der für die Einträge belegte Speicherplatz entgegen den programmiertechnischen Regeln nach Gebrauch nicht wieder freigegeben wird, würde der Umfang des von der Tabelle belegten Speicherplatzes stetig zunehmen, was nach einiger Zeit zum Absturz des Betriebssystems führt.

Ein weiteres Beispiel für vom Betriebssystem bereitgestellte Ressourcen sind die Handles für grafische Anzeigeelemente, die sogenannten GUI-Handles, wobei GUI für "Graphical User Interface" steht. Wenn ein Treiber derartige Handles belegt und nach Gebrauch nicht wieder ordnungsgemäß freigibt, dann steigt während des Betriebs die von dem jeweiligen Treiber belegte Anzahl von Handles stetig an. Nachdem jedoch die Anzahl der vom Betriebssystem vergebbaren Handles beschränkt ist, führt auch die zunehmende Anzahl von Handles unweigerlich zum Absturz des Betriebssystems.

Als weiteres Beispiel für vom Betriebssystem bereitgestellte Ressourcen sind die Threads zu nennen. Als Thread wird ein Ausführungsstrang, also ein sequentieller Abarbeitungslauf innerhalb eines Prozesses bezeichnet. Dabei ist jeder Thread beziehungsweise Programmfaden für die Ausführung einer bestimmten Aufgabe verantwortlich. Die Ausführungsstränge der Programmfunktionen können damit in überschaubare Einheiten aufgeteilt werden. Ein Prozess kann mehrere Threads oder, wenn bei einem Programmablauf keine Parallelverarbeitung vorgesehen ist, auch nur einen einzigen Thread beinhalten. Threads teilen sich innerhalb eines Prozessors Prozessoren, den Speicher und andere betriebssystemabhängige Ressourcen wie Dateien und Netzwerk-verbindungen. Deshalb ist der Verwaltungsaufwand für Threads üblicherweise geringer als der für Prozesse. Ein wesentlicher Effizienzvorteil von Threads besteht zum einen darin, dass im Gegensatz zu Prozessen beim Threadwechsel kein vollständiger Wechsel des Prozesskontextes notwendig ist, da alle Threads einen gemeinsamen Teil des Prozesskontextes verwenden, zum andern in der einfachen Kommunikation und schnellem Datenaustausch zwischen Threads. In Bezug auf Threads kann es vorkommen, dass ein Treiber eine Vielzahl von Threads startet, die gestarteten Threads nach ihrer Abarbeitung aber nicht ordnungsgemäß beendet. In diesem Fall nimmt die Anzahl der vom Treiber gestarteten Threads stetig zu. Nachdem das Betriebssystem nur eine begrenzte Anzahl von Threads verwalten kann, kann auch dies zu einem Absturz des Betriebssystems führen.

Ein weiteres Beispiel für eine vom Treiber beanspruchte Ressource ist der vom Treiber nach außen gerichtete Netzwerkverkehr. Wenn ein Treiber so programmiert ist, dass der nach außen gerichtete Netzwerkverkehr ständig zunimmt, wird auch dies nach gewisser Zeit zu Problemen und gegebenenfalls zum Systemabsturz führen.

Um derartige durch unsachgemäß programmierte Treiber und stetig anwachsenden Ressourcenverbrauch verursachten Probleme zu erkennen und nach Möglichkeit zu vermeiden, umfasst die Gerätezugriffssoftware 108 gemäß den Ausführungsformen der vorliegenden Erfindung eine Überwachungseinheit 116, die dazu ausgelegt ist, die durch die Treiber belegten Ressourcen zu überwachen, einen regelwidrigen Anstieg der Ressourcenbelegung zu erkennen und im Fall eines derartigen Anstiegs Gegenmaßnahmen zu veranlassen. Bei der in Fig. 1 gezeigten Ausführungsform ist die Überwachungseinheit 116 als Teil der Rahmenapplikation 109 ausgebildet. Alternativ dazu wäre es möglich, eine Überwachungseinheit als Teil der Gerätezugriffssoftware 108, aber als von der Rahmenapplikation 109 separate Einheit zu implementieren, wie dies in Fig. 1 gestrichelt dargestellt ist.

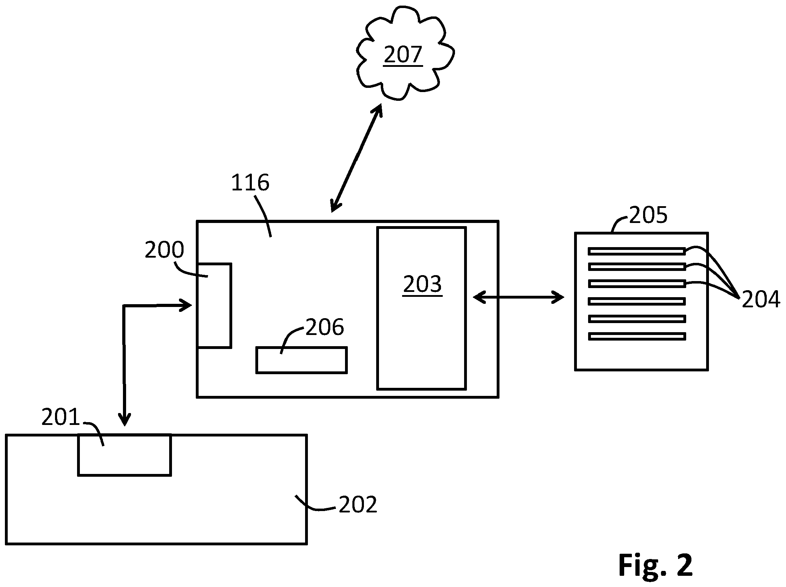

In Fig. 2 ist die Überwachungseinheit 116 gezeigt, welche dazu ausgelegt ist, eine überhöhte und nicht regelkonforme Ressourcenbeanspruchung von Treibern, die in die Gerätezugriffssoftware 108 eingebunden sind, zu erkennen. Hierzu umfasst die Überwachungseinheit 116 eine Datenschnittstelle 200, über die sie auf eine Debugging-Schnittstelle 201 des Betriebssystems 202 zugreifen kann. Bei dieser Debugging-Schnittstelle 201 kann es sich beispielsweise um die vom Betriebssystem Windows bereitgestellte Windows-Debugging-Schnittstelle handeln. Über die Debugging-Schnittstelle 201 können von der Überwachungseinheit 116 aus Parameter des Betriebssystems abgerufen werden, insbesondere solche Parameter, die die aktuelle Ressourcenbelegung des Betriebssystems in Bezug auf Speicherplatz, Handles, Threads und nach außen gerichteten Netzwerkverkehr anzeigen. Bei den von der Überwachungseinheit 116 über die Debugging-Schnittstelle 201 und die Datenschnittstelle 200 abrufbaren Parametern kann es sich beispielsweise um den von den Treibern beanspruchten Speicherplatz, um die Anzahl der vergebenen Handles, um die Anzahl der aktiven Threads oder um die Datenrate des nach außen gerichteten Netzwerkverkehrs handeln.

Der Abruf und die Auswertung von ausgewählten Parametern werden durch eine Abfolge von Befehlen einer Kommandosprache gesteuert. Hierzu umfasst die Überwachungseinheit 116 eine Interpretereinheit 203, die dazu ausgelegt ist, eine Sequenz von Befehlen 204 einer Kommandosprache abzuarbeiten. Die Befehle 204 können beispielsweise in Form eines Scripts 205 angegeben sein. Die Befehle 204 können beispielsweise Schleifenbefehle umfassen, um ausgewählte Parameter in regelmäßigen zeitlichen Abständen über die Debugging-Schnittstelle 201 des Betriebssystems 202 abzurufen. Die so erfassten Parameterwerte können beispielsweise auf Seiten der Überwachungseinheit 116 abgespeichert werden. Auf diese Weise können Parameter, welche die Ressourcenbelegung der Treiber widerspiegeln, in ihrem zeitlichen Verlauf erfasst und verfolgt werden, um auf diese Weise die Ressourcenbelegung überwachen zu können.

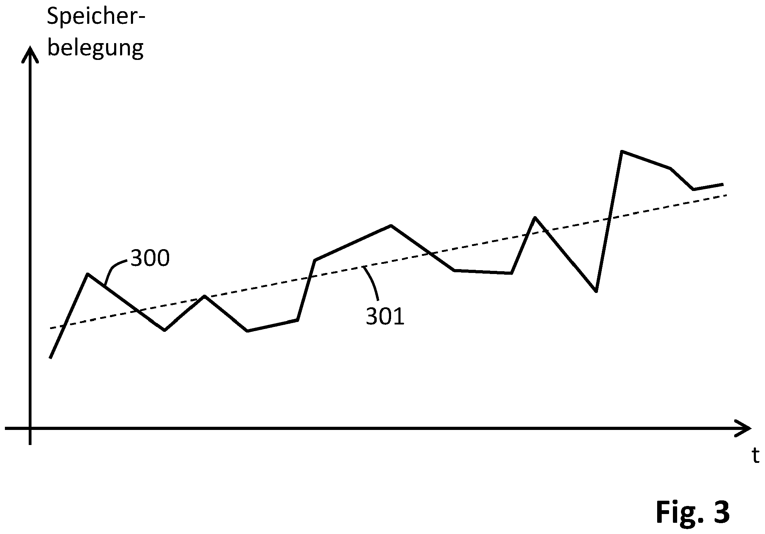

In Fig. 3 ist eine Kurve 300 aufgetragen, die den Wert eines Parameters, der den von den Treibern belegten Speicher anzeigt, als Funktion der Zeit zeigt. Es ist zu erkennen, dass die Speicherbelegung infolge der Aktivitäten der einzelnen Treiber zeitlichen Schwankungen unterworfen ist, wobei jedoch zusätzlich zu diesen Schwankungen eine stetig ansteigende Speicherbelegung zu erkennen ist, die in Fig. 3 als gestrichelte Linie 301 eingezeichnet ist. Der im zeitlichen Mittel stetig steigende Verlauf der Speicherbeanspruchung durch die Treiber zeigt an, dass es zumindest einen Treiber gibt, der den einmal beanspruchten Speicherplatz nicht regelkonform wieder freigibt. Bei der in Fig. 3 gezeigten stetigen Zunahme der Speicherbelegung ist ein langfristig stabiler Betrieb der Gerätezugriffssoftware 108 auf dem Host 107 nicht möglich, vielmehr würde es nach einer gewissen Zeit zu einem Absturz des Betriebssystems kommen. Auch bei anderen vom Betriebssystem bereitgestellten Ressourcen, wie beispielsweise der Anzahl der Handles, der Anzahl der Threads sowie der Bandbreite des nach außen gerichteten Netzwerkverkehrs zeigt ein stetiger Anstieg im Verlauf der Zeit an, dass beanspruchte Ressourcen des Betriebssystems nicht ordnungsgemäß zurückgegeben werden, was auch bei diesen Beispielen zu absehbaren Problemen führt.

Zur Auswertung der von der Debugging-Schnittstelle 201 des Betriebssystems 202 abgerufenen Parameter ist auf Seiten der Überwachungseinheit 116 eine Auswerteeinheit 206 vorgesehen, die dazu ausgelegt ist, den zeitlichen Verlauf der abgerufenen Parameter zu verfolgen und einen nicht regelkonformen Anstieg von belegten Ressourcen des Betriebssystems zu erkennen. Hierzu kann die Auswerteeinheit 206 beispielsweise den zeitlichen Verlauf eines Parameters ermitteln und anhand dieses zeitlichen Verlaufs dann analysieren, ob ein regelwidriger zeitlicher Anstieg vorliegt oder nicht. Beispielsweise kann die Auswerteeinheit 206 hierzu detektieren, ob der zeitliche Anstieg des jeweiligen Parameters einen vorgegebenen Grenzwert überschreitet oder nicht.

Wenn die Auswerteeinheit 206 feststellt, dass ein nicht regelkonformer zeitlicher Anstieg der von den Treibern beanspruchten Ressourcen des Betriebssystems 202 vorliegt, dann ermittelt die Auswerteeinheit 206 in einem zweiten Schritt, welcher der in die Rahmenapplikation 109 eingebundenen Treiber für den regelwidrigen Anstieg der beanspruchten Ressourcen verantwortlich ist. Hierzu kann die Auswerteeinheit 206 beispielsweise verfolgen, welcher der Treiber Speicherplatz beansprucht, Handles anfordert, Threads startet oder Netzwerkverkehr verursacht. Auf diese Weise ist es möglich, den oder die Treiber zu identifizieren, die für den regelwidrigen Anstieg der belegten Ressourcen verantwortlich sind. Auf diese Weise kann das zugrundeliegende Problem lokalisiert werden, bevor es zu einem Systemabsturz kommt. Insofern kann die Überwachungseinheit 116 als automatisierte Debugging-Einheit betrachtet werden, welche während des laufenden Betriebs eine stetige Systemüberwachung durchführt.

Wenn die Überwachungseinheit 116 in Bezug auf die Ressourcenbeanspruchung der Treiber ein Problem erkennt, kann sie ein oder mehrere geeignete Gegenmaßnahmen initiieren. Im Folgenden werden einige mögliche Gegenmaßnahmen diskutiert. Die im Folgenden beschriebenen Gegenmaßnahmen können jeweils für sich, aber auch in beliebiger Kombination durchgeführt werden.

Eine mögliche Gegenmaßnahme ist, den Benutzer auf einem Display oder einer anderen geeigneten Anzeigeeinheit, beispielsweise auch mittels einer an ein Mobilgerät gesendeten Nachricht, auf das Problem einer zunehmenden Ressourcenbeanspruchung durch die Treiber hinzuweisen. Der Benutzer kann beispielsweise darauf aufmerksam gemacht werden, dass der Speicherbedarf des Systems, die Zahl der belegten Handles, die Zahl der gestarteten Threads oder der nach außen gerichtete Netzwerkverkehr stetig zunimmt. Zusätzlich kann dem Benutzer eine Prognose angezeigt werden, wann bei fortschreitendem Ressourcenverbrauch mit einem Systemabsturz zu rechnen ist. Der Benutzer kann dann abschätzen, wie viel Zeit ihm zur Lösung dieses Problems noch bleibt. Zusätzlich können auch Informationen zur Identifikation des nicht regelkonform arbeitenden Treibers angezeigt werden.

Eine weitere mögliche Gegenmaßnahme ist, die Informationen zu dem Problem automatisch an eine Supporteinrichtung weiterzuleiten, beispielsweise per E-Mail. Eine derartige Supporteinrichtung kann beispielsweise vom Hersteller der Rahmenapplikation oder von einem Feldgerätehersteller betrieben werden. Alternativ dazu ist es möglich, dass ein Herstellerverband oder eine herstellerübergreifende Organisation eine derartige Supporteinrichtung unterhält. Nach Erhalt eines derartigen Problemberichts kann sich ein Mitarbeiter der Supporteinrichtung dann beispielsweise mit dem Benutzer in Verbindung setzen und Informationen bereitstellen, wie das Problem zu lösen ist. Alternativ dazu oder zusätzlich kann der Mitarbeiter der Supporteinrichtung per Fernzugriff auf den Host zugreifen und das Problem beheben. Beispielsweise kann der Mitarbeiter per Fernzugriff eine Neuinstallation des vorhandenen Treibers durchführen, eine aktualisierte Version des Treibers installieren oder einen Neustart des Systems auslösen.

Insbesondere ist es von Vorteil, wenn die Problemberichte zu von Treibern verursachten Problemen an eine zentrale Einrichtung, beispielsweise an einen Herstellerverband oder eine andere herstellerübergreifende Organisation gesendet werden, welche die Problemberichte von einer Vielzahl von Nutzern empfängt. Durch Auswerten der Problemberichte kann insbesondere herausgefunden werden, bei welchen Treibern eine nicht regelkonforme Beanspruchung von Ressourcen aufgetreten ist. In diesem Fall kann der Hersteller des betroffenen Treibers kontaktiert und zur Bereitstellung einer korrigierten Treiberversion aufgefordert werden.

Eine weitere mögliche Gegenmaßnahme ist, bei einem durch überhöhte Ressourcenbeanspruchung verursachten Problem Informationen zu diesem Problem von der Überwachungseinheit 116 aus in eine Cloud 207 zu schreiben, wobei in der Cloud 207 die Problemberichte von verschiedenen Feldbussystemen gesammelt werden. Basierend auf den in der Cloud 207 gesammelten Problemberichten kann dann eine Auswertung durchgeführt werden, um zu ermitteln, welche Treiber von welchen Herstellern häufig Probleme in Hinblick auf eine nicht regelkonforme Beanspruchung von Ressourcen verursachen. Die betroffenen Hersteller können dann aufgefordert werden, eine korrigierte Version der betroffenen Treiber bereitzustellen, um einen langzeitstabilen Betrieb der Gerätezugriffssoftware 108 zu ermöglichen.

Eine weitere mögliche Gegenmaßnahme ist, nach dem Erkennen einer überhöhten Beanspruchung von Ressourcen durch einen Treiber den betreffenden Treiber neu zu installieren oder eine aktualisierte Version des Treibers zu installieren. Mit einer Neuinstallation des Treibers kann zumindest erreicht werden, dass die belegten Ressourcen wieder freigegeben werden, so dass ein Systemabsturz verhindert wird. Die Installation einer neueren Version des Treibers bietet dagegen eine Chance, dass die neuere Version des Treibers regelkonform arbeitet, so dass die durch den Treiber verursachten Probleme in Bezug auf stetig zunehmende Ressourcenbeanspruchung in diesem Fall endgültig gelöst werden könnten. Um zu ermitteln, ob es zu dem betreffenden Treiber eine aktuellere Version gibt, kann die Überwachungseinheit 116 beispielsweise die Versionen des momentan installierten Treibers mit der Version des neuesten Treibers, der zu der jeweiligen Feldbuskomponente verfügbar ist, vergleichen. Für die Neuinstallation des vorhandenen Treibers oder einer aktuelleren Version des Treibers gibt es zum einen die Möglichkeit, dass der Benutzer mittels einer hierfür vorgesehenen Benutzerführung Schritt für Schritt durch den Installationsprozess geführt wird. Zum Abschluss des Installationsprozesses kann dem Benutzer beispielsweise angezeigt werden, dass die Neuinstallation des Treibers oder die Installation einer aktuelleren Version des Treibers erfolgreich abgeschlossen wurde. Alternativ dazu ist es möglich, dass die Überwachungseinheit 116 nach Erkennen eines Problems in Bezug auf die Ressourcenbeanspruchung durch einen Treiber automatisch eine Neuinstallation des betreffenden Treibers bzw. einer aktuelleren Version dieses Treibers durchführt bzw. eine derartige Installation veranlasst. Nach Abschluss der Installation kann dem Benutzer beispielsweise angezeigt werden, dass eine Neuinstallation oder eine Installation einer aktuelleren Version durchgeführt wurde.

Als weitere mögliche Gegenmaßnahme kann vorgesehen sein, dass die Überwachungseinheit 116 nach Erkennen eines nicht regelkonform arbeitenden Treibers einen Neustart des Hosts 107 veranlasst. Dadurch wird erreicht, dass die belegten Ressourcen wieder freigegeben werden, so dass ein unerwarteter Systemabsturz vermieden wird.

Gemäß einer weiteren möglichen Gegenmaßnahme kann beim Erkennen einer regelwidrigen Ressourcenbeanspruchung durch mindestens einen der Treiber automatisch ein Speicherdump durchgeführt werden, bei dem der Speicher vollständig oder teilweise abgespeichert wird. Ein derartiger Speicherdump kann sowohl für die Fehleranalyse als auch für die Wiederherstellung von ansonsten verlorener Information von Nutzen sein.

Probleme in Bezug auf eine übermäßige Beanspruchung von Ressourcen durch mindestens einen Treiber können insbesondere während der Durchführung eines Systemscans zu Abstürzen führen, weil während des Systemscans die Treiber für sämtliche Feldbuskomponenten angesprochen beziehungsweise installiert werden. Wenn einzelne Treiber die einmal beanspruchten Ressourcen nicht wieder freigeben, kann dies während des Systemscans zu einem Absturz des Betriebssystems führen. Dies gilt insbesondere, aber nicht nur, für große Feldbussysteme mit einer großen Anzahl von Feldbuskomponenten. Zur Vermeidung eines derartigen Systemabsturzes kann die Überwachungseinheit 116 dazu ausgelegt sein, dem Benutzer vorzuschlagen, den Systemscan in mehrere kleinere Teilscans zu zerlegen. Alternativ dazu kann die Überwachungseinheit 116 dazu ausgelegt sein, den Scan automatisch in eine Anzahl von nacheinander durchgeführten Teilscans zu zerlegen.

## Patentansprüche

1. Eine Gerätezugriffseinrichtung (108) für den Zugriff auf Feldbuskomponenten (101, 103, 104, 105, 106) eines Feldbussystems (100), wobei die Gerätezugriffseinrichtung (108) auf einem Host (107) oder einer Hostumgebung installiert ist, wobei die Gerätezugriffseinrichtung (108) aufweist:
eine Rahmenapplikation (109);
mindestens einen in die Rahmenapplikation (109) eingebundenen Treiber (111-115), der dazu ausgelegt ist, auf mindestens eine Feldbuskomponente (101, 103, 104, 105, 106) zuzugreifen,
**dadurch gekennzeichnet, dass**
die Gerätezugriffseinrichtung (108) eine Überwachungseinheit (116) aufweist, die dazu ausgelegt ist, Informationen zu von den Treibern (111-115) belegten Ressourcen, die vom Betriebssystem (202) des Hosts (107) oder der Hostumgebung bereitgestellt werden, zu erfassen,
und bei Erkennen eines regelwidrigen zeitlichen Anstiegs der von den Treibern (111-115) belegten Ressourcen mindestens eine vorbestimmte Gegenmaßnahme zu veranlassen.

2. Gerätezugriffseinrichtung (108) nach Anspruch 1, **dadurch gekennzeichnet, dass** die von der Überwachungseinheit (116) erfassten Ressourcen mindestens eines von folgenden umfassen: den von den Treibern (111-115) belegten Speicherplatz, die Zahl der von den Treibern (111-115) belegten Handles, die Zahl der von den Treibern (111-115) gestarteten Threads, der Umfang des von den Treibern (111-115) verursachten Netzwerkverkehrs.

3. Gerätezugriffseinrichtung (108) nach Anspruch 1 oder Anspruch 2, **gekennzeichnet durch** mindestens eines von folgenden:
die Überwachungseinheit (116) ist dazu ausgelegt, Parameter, die eine Belegung von vom Betriebssystem (202) bereitgestellten Ressourcen durch die Treiber (111-115) anzeigen, vom Betriebssystem (202) des Hosts (107) oder der Hostumgebung abzurufen;
die Überwachungseinheit (116) ist dazu ausgelegt, Parameter, die eine Belegung von vom Betriebssystem (202) bereitgestellten Ressourcen durch die Treiber (111-115) anzeigen, vom Betriebssystem (202) des Hosts (107) oder der Hostumgebung über eine Debugging-Schnittstelle (201) des Betriebssystems (202) abzurufen;
die Überwachungseinheit (116) ist dazu ausgelegt, Parameter, die eine Belegung von vom Betriebssystem (202) bereitgestellten Ressourcen durch die Treiber (111-115) anzeigen, vom Betriebssystem (202) des Hosts (107) oder der Hostumgebung gemäß einem vorgegebenen zeitlichen Schema abzurufen.

4. Gerätezugriffseinrichtung (108) nach einem der Ansprüche 1 bis 3, **gekennzeichnet durch** mindestens eines von folgenden:
die Überwachungseinheit (116) ist dazu ausgelegt, anhand der erfassten Informationen einen zeitlichen Verlauf der Belegung von Ressourcen durch die Treiber (111-115) zu ermitteln;
dass die Überwachungseinheit (116) dazu ausgelegt ist, anhand von vom Betriebssystem (202) des Hosts (107) oder der Hostumgebung abgerufenen Parametern einen zeitlichen Verlauf der Belegung von Ressourcen durch die Treiber (111-115) zu ermitteln;
die Überwachungseinheit (116) ist dazu ausgelegt, anhand eines vordefinierten Kriteriums einen regelwidrigen zeitlichen Anstieg der von den Treibern (111-115) belegten Ressourcen zu erkennen;
die Überwachungseinheit (116) ist dazu ausgelegt, einen zeitlichen Anstieg der von den Treibern (111-115) belegten Ressourcen mit einem vorgegebenen Schwellwert zu vergleichen.

5. Gerätezugriffseinrichtung (108) nach einem der Ansprüche 1 bis 4, **dadurch gekennzeichnet, dass** die Überwachungseinheit (116) dazu ausgelegt ist, in einem ersten Schritt zu ermitteln, ob die von den Treibern (111-115) belegten Ressourcen einen regelwidrigen zeitlichen Anstieg aufweisen, und falls die belegten Ressourcen einen regelwidrigen zeitlichen Anstieg aufweisen, in einem zweiten Schritt den mindestens einen Treiber (111-115) zu identifizieren, der für den regelwidrigen zeitlichen Anstieg der belegten Ressourcen verantwortlich ist.

6. Gerätezugriffseinrichtung (108) nach einem der Ansprüche 1 bis 5, **gekennzeichnet durch** mindestens eines von folgenden:
die Überwachungseinheit (116) ist dazu ausgelegt, den von den Treibern (111-115) belegten Speicherplatz zu verfolgen;
die Überwachungseinheit (116) ist dazu ausgelegt, die Zahl der von den Treibern (111-115) belegten Handles zu verfolgen;
die Überwachungseinheit (116) ist dazu ausgelegt, die Zahl der von den Treibern (111-115) gestarteten Threads zu verfolgen;
die Überwachungseinheit (116) ist dazu ausgelegt, den Umfang des von den Treibern (111-115) verursachten Netzwerkverkehrs zu verfolgen.

7. Gerätezugriffseinrichtung (108) nach einem der Ansprüche 1 bis 6, **gekennzeichnet durch** mindestens eines von folgenden:
die Überwachungseinheit (116) ist dazu ausgelegt, zu ermitteln, ob ein regelwidriger zeitlicher Anstieg des von den Treibern (111-115) belegten Speicherplatzes vorliegt und für den Fall, dass ein regelwidriger zeitlicher Anstieg vorliegt, den mindestens einen Treiber (111-115) zu identifizieren, der für den regelwidrigen zeitlichen Anstieg des belegten Speicherplatzes verantwortlich ist;
die Überwachungseinheit (116) ist dazu ausgelegt, zu ermitteln, ob ein regelwidriger zeitlicher Anstieg der Zahl der von den Treibern (111-115) belegten Handles vorliegt und für den Fall, dass ein regelwidriger zeitlicher Anstieg vorliegt, den mindestens einen Treiber (111-115) zu identifizieren, der für den regelwidrigen zeitlichen Anstieg der Zahl der von den Treibern (111-115) belegten Handles verantwortlich ist;
die Überwachungseinheit (116) ist dazu ausgelegt, zu ermitteln, ob ein regelwidriger zeitlicher Anstieg der Zahl der von den Treibern (111-115) gestarteten Threads vorliegt und für den Fall, dass ein regelwidriger zeitlicher Anstieg vorliegt, den mindestens einen Treiber (111-115) zu identifizieren, der für den regelwidrigen zeitlichen Anstieg der Zahl der von den Treibern (111-115) gestarteten Threads verantwortlich ist;
die Überwachungseinheit (116) ist dazu ausgelegt, zu ermitteln, ob ein regelwidriger zeitlicher Anstieg des Umfangs des von den Treibern (111-115) verursachten Netzwerkverkehrs vorliegt und für den Fall, dass ein regelwidriger zeitlicher Anstieg vorliegt, den mindestens einen Treiber (111-115) zu identifizieren, der für den regelwidrigen zeitlichen Anstieg des belegten Speicherplatzes verantwortlich ist.

8. Gerätezugriffseinrichtung (108) nach einem der Ansprüche 1 bis 7, **gekennzeichnet durch** mindestens eines von folgenden:
die Überwachungseinheit (116) umfasst eine Interpretereinheit (203), die dazu ausgelegt ist, eine Sequenz von Instruktionen (204) abzuarbeiten;
die Überwachungseinheit (116) umfasst eine Interpretereinheit (203), die dazu ausgelegt ist, eine Sequenz von Instruktionen (204) gemäß einem vorgegebenen Skript (205) abzuarbeiten.

9. Gerätezugriffseinrichtung (108) nach Anspruch 8, **gekennzeichnet durch** mindestens eines von folgenden:
die Instruktionen (204) sind dazu ausgelegt, den Abruf von Parametern, die eine Belegung von Ressourcen durch die Treiber (111-115) anzeigen, vom Betriebssystem (202) des Hosts (107) oder der Hostumgebung zu steuern;
die Instruktionen (204) sind dazu ausgelegt, die Auswertung des zeitlichen Verlaufs der von den Treibern (111-115) belegten Ressourcen zu steuern;
die Instruktionen (204) sind dazu ausgelegt, die Auswertung des zeitlichen Verlaufs der vom Betriebssystem (202) des Hosts (107) oder der Hostumgebung abgerufenen Parameter zu steuern;
die Instruktionen (204) umfassen Schleifenbefehle, welche dazu ausgelegt sind, einen zeitlich periodischen Abruf von Parametern, die eine Belegung von Ressourcen durch die Treiber (111-115) anzeigen, vom Betriebssystem (202) des Hosts (107) oder der Hostumgebung zu steuern.

10. Gerätezugriffseinrichtung (108) nach einem der Ansprüche 1 bis 9, **gekennzeichnet durch** mindestens eines von folgenden:
die Überwachungseinheit (116) ist als automatisierte Debuggingeinheit ausgebildet;
die Überwachungseinheit (116) ist dazu ausgebildet, selbsttätig die Belegung von Ressourcen durch den mindestens einen Treiber (111-115) zu verfolgen;
die Überwachungseinheit (116) weist eine Schnittstelle (200) zu einer Debugging-Schnittstelle (201) des Betriebssystems (202) auf, über die Parameter, die eine Belegung von Ressourcen durch die Treiber (111-115) anzeigen, abrufbar sind;
die Überwachungseinheit (116) ist als Teil der Rahmenapplikation (109) ausgebildet;
die Überwachungseinheit ist als zusätzlich zur Rahmenapplikation (109) vorgesehene Einheit ausgebildet.

11. Gerätezugriffseinrichtung (108) nach einem der Ansprüche 1 bis 10, **gekennzeichnet durch** mindestens eines von folgenden:
in die Rahmenapplikation (109) sind Treiber (111-115) entsprechend einem oder mehreren der folgenden Standards einbindbar: FDT/DTM, DD, EDD, EDS, FDI Device Packages;
bei der Rahmenapplikation (109) handelt es sich um eine FDT-Rahmenapplikation oder eine FDI-Rahmenapplikation und in die FDT-Rahmenapplikation oder FDI-Rahmenapplikation sind Treiber (111-115) des Standards FDT/DTM und/oder des Standards FDI Device Packages einbindbar.

12. Gerätezugriffseinrichtung (108) nach einem der Ansprüche 1 bis 11, **dadurch gekennzeichnet, dass** die mindestens eine vorbestimmte Gegenmaßnahme mindestens eines von folgenden umfasst:
einem Benutzer auf einem Display anzuzeigen, dass ein regelwidriger zeitlicher Anstieg der von den Treibern (111-115) belegten Ressourcen vorliegt;
dem Benutzer auf einem Display den mindestens einen Treiber (111-115) anzuzeigen,
der den regelwidrigen zeitlichen Anstieg der belegten Ressourcen verursacht;
dem Benutzer auf einem Display eine Prognose anzuzeigen, wann angesichts des regelwidrigen zeitlichen Anstiegs der belegten Ressourcen mit einem Absturz des Betriebssystems (202) zu rechnen ist;
eine Supporteinrichtung elektronisch zu benachrichtigen;
den Treiber (111-115), der für den regelwidrigen zeitlichen Anstieg der belegten Ressourcen verantwortlich ist, neu zu installieren;
einen Fernzugriff einer Supportinstanz auf den Host (107) oder die Hostumgebung zur Behebung der durch die Belegung von Ressourcen durch die Treiber (111-115) verursachten Probleme zu ermöglichen;
eine zentrale Instanz elektronisch zu benachrichtigen, welche dazu ausgelegt ist, von einer Vielzahl von Feldbussystemen Problemmeldungen zu Treibern (111-115) zu empfangen und auszuwerten;
die Informationen zum regelwidrigen zeitlichen Anstieg der von den Treibern (111-115) belegten Ressourcen in eine Cloud (207) zu schreiben, wobei in der Cloud (207) Informationen zu Problemen mit Treibern (111-115) von einer Vielzahl von Feldbussystemen gesammelt und ausgewertet werden;
für einen Treiber (111-115), der für den regelwidrigen zeitlichen Anstieg der belegten Ressourcen verantwortlich ist, zu ermitteln, ob die installierte Version des Treibers (111-115) veraltet ist, und falls die installierte Version des Treibers (111-115) veraltet ist, den Benutzer durch eine Installation einer aktuellen Version des Treibers (111-115) zu führen;
für einen Treiber (111-115), der für den regelwidrigen zeitlichen Anstieg der belegten Ressourcen verantwortlich ist, zu ermitteln, ob die installierte Version des Treibers (111-115) veraltet ist, und falls die installierte Version des Treibers (111-115) veraltet ist, automatisch eine Installation einer aktuellen Version des Treibers (111-115) zu veranlassen;
einen Neustart des Hosts (107) oder der Hostumgebung zu veranlassen;
einen Speicherdump von zumindest einem Teil des Speichers des Hosts (107) oder der Hostumgebung zu veranlassen.

13. Ein System der Automatisierungstechnik, welches aufweist:
ein Feldbussystem (100) mit mindestens einer Feldbuskomponente (101, 103, 104, 105, 106),
eine Gerätezugriffseinrichtung (108), welche auf einem Host (107) oder einer Hostumgebung installiert ist, wobei die Gerätezugriffseinrichtung (108) aufweist:
eine Rahmenapplikation (109);
mindestens einen in die Rahmenapplikation (109) eingebundenen Treiber (111-115), der dazu ausgelegt ist, auf mindestens eine Feldbuskomponente (101, 103, 104, 105, 106) des Feldbussystems (100) zuzugreifen,
**dadurch gekennzeichnet, dass**
das System eine Überwachungseinheit (116) aufweist, die dazu ausgelegt ist, Informationen zu von den Treibern (111-115) belegten Ressourcen, die vom Betriebssystem (202) des Hosts (107) oder der Hostumgebung bereitgestellt werden, zu erfassen,
und bei Erkennen eines regelwidrigen zeitlichen Anstiegs der von den Treibern (111-115) belegten Ressourcen mindestens eine vorbestimmte Gegenmaßnahme zu veranlassen.

14. Verfahren zum Überwachen des Betriebs einer Gerätezugriffseinrichtung (108), welche auf einem Host (107) oder einer Hostumgebung installiert ist, wobei die Gerätezugriffseinrichtung (108) dazu ausgelegt ist, auf Feldbuskomponenten (101, 103, 104, 105, 106) eines Feldbussystems (100) zuzugreifen, wobei die Gerätezugriffseinrichtung (108) umfasst:
eine Rahmenapplikation (109),
mindestens einen in die Rahmenapplikation (109) eingebundenen Treiber (111-115), der dazu ausgelegt ist, auf mindestens eine Feldbuskomponente (101, 103, 104, 105, 106) des Feldbussystems (100) zuzugreifen,
wobei das Verfahren folgende Schritte aufweist:
Erfassen von Informationen zu von den Treibern (111-115) belegten Ressourcen, die vom Betriebssystem (202) des Hosts (107) oder der Hostumgebung bereitgestellt werden;
Auswerten des zeitlichen Verlaufs der von den Treibern (111-115) belegten Ressourcen;
falls ein regelwidriger zeitlicher Anstieg der von den Treibern (111-115) belegten Ressourcen ermittelt wird, Veranlassen von mindestens einer vorbestimmten Gegenmaßnahme.

15. Verfahren nach Anspruch 14, **gekennzeichnet durch** mindestens einen der folgenden Schritte:
Abrufen von Parametern, die eine Belegung von vom Betriebssystem (202) bereitgestellten Ressourcen durch die Treiber (111-115) anzeigen, vom Betriebssystem (202) des Hosts (107) oder der Hostumgebung;
Ermitteln, anhand von vom Betriebssystem (202) des Hosts (107) oder der Hostumgebung abgerufenen Parametern, eines zeitlichen Verlaufs der Belegung von Ressourcen durch die Treiber (111-115);
Erkennen, anhand eines vordefinierten Kriteriums, eines regelwidrigen zeitlichen Anstiegs der von den Treibern (111-115) belegten Ressourcen;
Vergleichen eines zeitlichen Anstiegs der von den Treibern (111-115) belegten Ressourcen mit einem vorgegebenen Schwellwert;
Ermitteln, ob die von den Treibern (111-115) belegten Ressourcen einen regelwidrigen zeitlichen Anstieg aufweisen, und falls die belegten Ressourcen einen regelwidrigen zeitlichen Anstieg aufweisen, Identifizieren des mindestens einen Treibers (111-115), der für den regelwidrigen zeitlichen Anstieg der belegten Ressourcen verantwortlich ist.

## Claims

1. A device access means (108) for accessing fieldbus components (101, 103, 104, 105, 106) of a fieldbus system (100), wherein the device access means (108) is installed in a host (107) or a host environment, wherein the device access means (108) has:
a frame application (109);
at least one driver (111-115) incorporated into the frame application (109), which is configured to access at least one fieldbus component (101, 103, 104, 105, 106),
wherein
the device access means (108) has a monitoring unit (116) which is configured to record information on resources used by the drivers (111-115) which are provided by the operating system (202) of the host (107) or the host environment,
and, when an irregular temporary increase in the resources used by the drivers (111-115) is recognized, to arrange for at least one predetermined countermeasure.

2. The device access means (108) as claimed in claim 1, wherein the resources recorded by the monitoring unit (116) comprise at least one of the following: the storage space used by the drivers (111-115), the number of handles used by the drivers (111-115), the number of threads started by the drivers (111-115), and the extent of the network traffic caused by the drivers (111-115).

3. The device access means (108) as claimed in claim 1 or claim 2, **characterized by** at least one of the following:
the monitoring unit (116) is configured to retrieve from the operating system (202) of the host (107) or the host environment parameters which indicate a use by the drivers (111-115) of resources provided by the operating system (202); the monitoring unit (116) is configured to retrieve from the operating system (202) of the host (107) or the host environment parameters which indicate a use by the drivers (111-115) of resources provided by the operating system (202), via a debugging interface (201) of the operating system (202);
the monitoring unit (116) is configured to retrieve from the operating system (202) of the host (107) or the host environment parameters which indicate a use by the drivers (111-115) of resources provided by the operating system (202), according to a predefined temporary scheme.

4. The device access means (108) as claimed in one of claims 1 to 3, **characterized by** at least one of the following:
the monitoring unit (116) is configured to ascertain a temporal profile of the use of resources by the drivers (111-115) by reference to the recorded information;
the monitoring unit (116) is configured to ascertain a temporal profile of the use of resources by the drivers (111-115) by reference to parameters retrieved from the operating system (202) of the host (107) or the host environment;
the monitoring unit (116) is configured to recognize an irregular temporary increase in the resources used by the drivers (111-115) by reference to a predefined criterion;
the monitoring unit (116) is configured to compare a temporary increase in the resources used by the drivers (111-115) with a predefined threshold value.

5. The device access means (108) as claimed in one of claims 1 to 4, wherein the monitoring unit (116) is configured, in a first step, to ascertain whether there is an irregular temporary increase in the resources used by the drivers (111-115), and, if there is an irregular temporary increase in the resources used, in a second step, to identify the at least one driver (111-115) that is responsible for the irregular temporary increase in the resources used.

6. The device access means (108) as claimed in one of claims 1 to 5, **characterized by** at least one of the following:
the monitoring unit (116) is configured to track the storage space used by the drivers (111-115);
the monitoring unit (116) is configured to track the number of handles used by the drivers (111-115);
the monitoring unit (116) is configured to track the number of threads started by the drivers (111-115);
the monitoring unit (116) is configured to track the extent of the network traffic caused by the drivers (111-115).

7. The device access means (108) as claimed in one of claims 1 to 6, **characterized by** at least one of the following:
the monitoring unit (116) is configured to ascertain whether there is an irregular temporary increase in the storage space used by the drivers (111-115) and, if there is an irregular temporary increase, to identify the at least one driver (111-115) that is responsible for the irregular temporary increase in the storage space used;
the monitoring unit (116) is configured to ascertain whether there is an irregular temporary increase in the number of handles used by the drivers (111-115) and, if there is an irregular temporary increase, to identify the at least one driver (111-115) that is responsible for the irregular temporary increase in the number of handles used by the drivers (111-115);
the monitoring unit (116) is configured to ascertain whether there is an irregular temporary increase in the number of threads started by the drivers (111-115) and, if there is an irregular temporary increase, to identify the at least one driver (111-115) that is responsible for the irregular temporary increase in the number of threads started by the drivers (111-115);
the monitoring unit (116) is configured to ascertain whether there is an irregular temporary increase in the extent of the network traffic caused by the drivers (111-115) and, if there is an irregular temporary increase, to identify the at least one driver (111-115) that is responsible for the irregular temporary increase in the extent of the network traffic caused by the drivers (111-115).

8. The device access means (108) as claimed in one of claims 1 to 7, **characterized by** at least one of the following:
the monitoring unit (116) comprises an interpreter unit (203) which is configured to process a sequence of instructions (204);
the monitoring unit (116) comprises an interpreter unit (203) which is configured to process a sequence of instructions (204) according to a predefined script (205).

9. The device access means (108) as claimed in claim 8, **characterized by** at least one of the following:
the instructions (204) are configured to control the retrieval from the operating system (202) of the host (107) or the host environment of parameters which indicate a use of resources by the drivers (111-115);
the instructions (204) are configured to control the evaluation of the temporal profile of the resources used by the drivers (111-115);
the instructions (204) are configured to control the evaluation of the temporal profile of the parameters retrieved from the operating system (202) of the host (107) or the host environment;
the instructions (204) comprise looping commands which are configured to control a temporally periodic retrieval from the operating system (202) of the host (107) or the host environment of parameters which indicate a use of resources by the drivers (111-115).

10. The device access means (108) as claimed in one of claims 1 to 9, **characterized by** at least one of the following:
the monitoring unit (116) is configured as an automated debugging unit;
the monitoring unit (116) is configured to track independently the use of resources by the at least one driver (111-115);
the monitoring unit (116) has an interface (200) to a debugging interface (201) of the operating system (202) via which parameters which indicate a use of resources by the drivers (111-115) can be retrieved;
the monitoring unit (116) is configured as part of the frame application (109);
the monitoring unit is configured as a unit provided in addition to the frame application (109).

11. The device access means (108) as claimed in one of claims 1 to 10, **characterized by** at least one of the following:
drivers (111-115) corresponding to one or more of the following standards can be incorporated into the frame application (109): FDT/DTM, DD, EDD, EDS, FDI Device Packages;
the frame application (109) is an FDT frame application or an FDI frame application and drivers (111-115) of the standard FDT/DTM and/or of the standard FDI Device Packages can be incorporated into the FDT frame application or FDI frame application.

12. The device access means (108) as claimed in one of claims 1 to 11, wherein the at least one predetermined countermeasure comprises at least one of the following:
indicating to a user on a display that there is an irregular temporary increase in the resources used by the drivers (111-115);
indicating to the user on a display the at least one driver (111-115) that is causing the irregular temporary increase in the resources used;
indicating to the user on a display a prediction of when, given the irregular temporary increase in the resources used, a crash of the operating system (202) is to be expected;
electronically notifying a support facility;
reinstalling the driver (111-115) that is responsible for the irregular temporary increase in the resources used;
enabling remote access by a support body to the host (107) or the host environment to enable the remedying of the problems caused by the use of resources by the drivers (111-115);
electronically notifying a central authority which is designed to receive and evaluate a plurality of fieldbus system problem messages on drivers (111-115);
writing the information on the irregular temporary increase in the resources used by the drivers (111-115) to a cloud (207), wherein information on problems with drivers (111-115) is gathered by a plurality of fieldbus systems and evaluated in the cloud (207);
for a driver (111-115) that is responsible for the irregular temporary increase in the resources used, ascertaining whether the installed version of the driver (111-115) is obsolete and, if the installed version of the driver (111-115) is obsolete, guiding the user through an installation of a current version of the driver (111-115); for a driver (111-115) that is responsible for the irregular temporary increase in the resources used, ascertaining whether the installed version of the driver (111-115) is obsolete and, if the installed version of the driver (111-115) is obsolete, automatically arranging for an installation of a current version of the driver (111-115);
arranging for a rebooting of the host (107) or the host environment;
arranging for a memory dump of at least part of the memory of the host (107) or the host environment.

13. A system of automation technology which has:
a fieldbus system (100) with at least one fieldbus component (101, 103, 104, 105, 106),
a device access means (108) which is installed in a host (107) or a host environment, wherein
the device access means (108) has:
a frame application (109);
at least one driver (111-115) incorporated into the frame application (109), which is configured to access at least one fieldbus component (101, 103, 104, 105, 106) of the fieldbus system (100),
wherein
the system has a monitoring unit (116) which is configured to record information on resources used by the drivers (111-115) which are provided by the operating system (202) of the host (107) or the host environment,
and, when an irregular temporary increase in the resources used by the drivers (111-115) is recognized, to arrange for at least one predetermined countermeasure.

14. A method for monitoring the operation of a device access means (108) which is installed in a host (107) or a host environment, wherein the device access means (108) is configured to access fieldbus components (101, 103, 104, 105, 106) of a fieldbus system (100), wherein the device access means (108) comprises:
a frame application (109),
at least one driver (111-115) incorporated into the frame application (109), which is configured to access at least one fieldbus component (101, 103, 104, 105, 106) of the fieldbus system (100),
wherein the method has the following steps:
Recording information on resources used by the drivers (111-115) which are provided by the operating system (202) of the host (107) or the host environment; evaluating the temporal profile of the resources used by the drivers (111-115);
if an irregular temporary increase in the resources used by the drivers (111-115) is ascertained, arranging at least one predetermined countermeasure.

15. The method as claimed in claim 14, **characterized by** at least one of the following steps:
retrieving from the operating system (202) of the host (107) or the host environment parameters which indicate a use by the drivers (111-115) of resources provided by the operating system (202);
ascertaining, by reference to parameters retrieved from the operating system (202) of the host (107) or the host environment, a temporal profile of the use of resources by the drivers (111-115);
recognizing, by reference to a predefined criterion, an irregular temporary increase in the resources used by the drivers (111-115);
comparing a temporary increase in the resources used by the drivers (111-115) with a predefined threshold value;
ascertaining whether there is an irregular temporary increase in the resources used by the drivers (111-115) and, if there is an irregular temporary increase in the resources used, identifying the at least one driver (111-115) which is responsible for the irregular temporary increase in the resources used.

## Revendications

1. Dispositif d'accès aux appareils (108) destiné à l'accès aux composants de bus de terrain (101, 103, 104, 105, 106) d'un système de bus de terrain (100), le dispositif d'accès aux appareils (108) étant installé sur un hôte (107) ou un environnement hôte, le dispositif d'accès aux appareils (108) comprenant :
une application cadre (109) ;
au moins un driver (111-115) intégré dans l'application cadre (109), lequel driver est conçu pour accéder à au moins un composant de bus de terrain (101, 103, 104, 105, 106),
**caractérisé en ce que**
le dispositif d'accès aux appareils (108) comprend une unité de surveillance (116), laquelle est conçue pour acquérir des informations sur les ressources occupées par les drivers (111-115), lesquelles ressources sont mises à disposition par le système d'exploitation (202) de l'hôte (107) ou de l'environnement hôte
et, en cas de détection d'une augmentation temporelle irrégulière des ressources occupées par les drivers (111-115), pour déclencher au moins une contre-mesure prédéterminée.

2. Dispositif d'accès aux appareils (108) selon la revendication 1, **caractérisé en ce que** les ressources acquises par l'unité de surveillance (116) comprennent au moins l'un des éléments suivants : l'espace mémoire occupé par les drivers (111-115), le nombre de handles occupés par les drivers (111-115), le nombre de threads lancés par les drivers (111-115), le volume de trafic réseau généré par les drivers (111-115).

3. Dispositif d'accès aux appareils (108) selon la revendication 1 ou la revendication 2, **caractérisé par** au moins un des éléments suivants :
l'unité de surveillance (116) est conçue pour récupérer des paramètres indiquant une occupation par les drivers (111-115) de ressources mises à disposition par le système d'exploitation (202), à partir du système d'exploitation (202) de l'hôte (107) ou de l'environnement hôte ;
l'unité de surveillance (116) est conçue pour récupérer des paramètres indiquant une occupation par les drivers (111-115) de ressources mises à disposition par le système d'exploitation (202), à partir du système d'exploitation (202) de l'hôte (107) ou de l'environnement hôte via une interface de débogage (201) du système d'exploitation (202) ;
l'unité de surveillance (116) est conçue pour récupérer des paramètres indiquant une occupation par les drivers (111-115) de ressources mises à disposition par le système d'exploitation (202), à partir du système d'exploitation (202) de l'hôte (107) ou de l'environnement hôte, selon un schéma temporel prédéfini.

4. Dispositif d'accès aux appareils (108) selon l'une des revendications 1 à 3, **caractérisé par** au moins l'un des éléments suivants :
l'unité de surveillance (116) est conçue pour déterminer, à l'aide des informations saisies, une évolution temporelle de l'occupation de ressources par les drivers (111-115) ;
l'unité de surveillance (116) est conçue pour déterminer, à l'aide de paramètres récupérés par le système d'exploitation (202) de l'hôte (107) ou de l'environnement hôte, une évolution temporelle de l'occupation de ressources par les drivers (111-115) ;
l'unité de surveillance (116) est conçue pour détecter, à l'aide d'un critère prédéfini, une augmentation temporelle irrégulière des ressources occupées par les drivers (111-115) ;
l'unité de surveillance (116) est conçue pour comparer une augmentation dans le temps des ressources occupées par les drivers (111-115) avec une valeur seuil prédéfinie.

5. Dispositif d'accès aux appareils (108) selon l'une des revendications 1 à 4, **caractérisé en ce que** l'unité de surveillance (116) est conçue pour déterminer, dans une première étape, si les ressources occupées par les drivers (111-115) présentent une augmentation temporelle irrégulière et, dans le cas où les ressources occupées présentent une augmentation temporelle irrégulière, pour identifier, dans une deuxième étape, l'au moins un driver (111-115) qui est responsable de l'augmentation temporelle irrégulière des ressources occupées.

6. Dispositif d'accès aux appareils (108) selon l'une des revendications 1 à 5, **caractérisé par** au moins l'un des éléments suivants :
l'unité de surveillance (116) est conçue pour suivre l'espace mémoire occupé par les drivers (111-115) ;
l'unité de surveillance (116) est conçue pour suivre le nombre de handles occupés par les drivers (111-115) ;
l'unité de surveillance (116) est conçue pour suivre le nombre de threads lancés par les drivers (111-115) ;
l'unité de surveillance (116) est conçue pour suivre le volume du trafic réseau généré par les drivers (111-115).

7. Dispositif d'accès aux appareils (108) selon l'une des revendications 1 à 6, **caractérisé par** au moins l'un des éléments suivants :
l'unité de surveillance (116) est conçue pour déterminer s'il y a une augmentation temporelle irrégulière de l'espace mémoire occupé par les drivers (111-115) et, dans le cas où il y a une augmentation temporelle irrégulière, identifier l'au moins un driver (111-115) qui est responsable de l'augmentation temporelle irrégulière de l'espace mémoire occupé ;
l'unité de surveillance (116) est conçue pour déterminer s'il y a une augmentation temporelle irrégulière du nombre de handles occupés par les drivers (111-115) et, dans le cas où il y a une augmentation temporelle irrégulière, identifier l'au moins un driver (111-115) qui est responsable de l'augmentation temporelle irrégulière du nombre de handles occupés par les drivers (111-115) ;
l'unité de surveillance (116) est conçue pour déterminer s'il y a une augmentation temporelle irrégulière du nombre de threads lancés par les (111-115) et, dans le cas où il y a une augmentation temporelle irrégulière, identifier l'au moins un driver (111-115) qui est responsable de l'augmentation temporelle irrégulière du nombre de threads lancés par les drivers (111-115) ;
l'unité de surveillance (116) est conçue pour déterminer s'il y a une augmentation temporelle irrégulière du volume du trafic réseau généré par les drivers (111-115) et, dans le cas où il y a une augmentation temporelle irrégulière, pour identifier l'au moins un driver (111-115) qui est responsable de l'augmentation temporelle irrégulière de l'espace mémoire occupé.

8. Dispositif d'accès aux appareils (108) selon l'une des revendications 1 à 7, **caractérisé par** au moins l'un des éléments suivants :
l'unité de surveillance (116) comprend une unité d'interprétation (203) conçue pour traiter une séquence d'instructions (204) ;
l'unité de surveillance (116) comprend une unité d'interprétation (203) conçue pour traiter une séquence d'instructions (204) selon un script prédéfini (205).

9. Dispositif d'accès aux appareils (108) selon la revendication 8, **caractérisé par** au moins un des éléments suivants :
les instructions (204) sont conçues pour commander la récupération, auprès du système d'exploitation (202) de l'hôte (107) ou de l'environnement hôte, de paramètres indiquant une occupation de ressources par les drivers (111-115) ;
les instructions (204) sont conçues pour commander l'évaluation de l'évolution dans le temps des ressources occupées par les drivers (111-115) ;
les instructions (204) sont conçues pour commander l'évaluation de l'évolution dans le temps des paramètres récupérés par le système d'exploitation (202) de l'hôte (107) ou de l'environnement hôte ;
les instructions (204) comprennent des instructions de boucle qui sont conçues pour commander une récupération périodique dans le temps, à partir du système d'exploitation (202) de l'hôte (107) ou de l'environnement hôte, de paramètres indiquant une occupation de ressources par les drivers (111-115).

10. Dispositif d'accès aux appareils (108) selon l'une des revendications 1 à 9, **caractérisé par** au moins l'un des éléments suivants :
l'unité de surveillance (116) est conçue comme une unité de débogage automatisée ;
l'unité de surveillance (116) est conçue pour suivre automatiquement l'occupation des ressources par l'au moins un driver (111-115) ;
l'unité de surveillance (116) présente une interface (200) avec une interface de débogage (201) du système d'exploitation (202), par l'intermédiaire de laquelle des paramètres indiquant une occupation de ressources par les drivers (111-115) peuvent être récupérés ;
l'unité de surveillance (116) est conçue comme partie de l'application cadre (109) ; l'unité de surveillance est conçue comme unité prévue en plus de l'application cadre (109).

11. Dispositif d'accès aux appareils (108) selon l'une des revendications 1 à 10, **caractérisé par** au moins l'un des éléments suivants :
dans l'application cadre (109), des drivers (111-115) correspondant à un ou plusieurs des standards suivants peuvent être intégrés : FDT/DTM, DD, EDD, EDS, FDI Device Packages ;
concernant l'application cadre (109), il s'agit d'une application cadre FDT ou d'une application cadre FDI, des drivers (111-115) du standard FDT/DTM et/ou du standard FDI Device Packages pouvant en outre être intégrés dans l'application cadre FDT ou l'application cadre FDI.

12. Dispositif d'accès aux appareils (108) selon l'une des revendications 1 à 11, **caractérisé en ce que** l'au moins une contre-mesure prédéterminée comprend au moins l'une des actions suivantes :
affichage à un utilisateur sur un écran de l'existence d'une augmentation temporelle irrégulière des ressources occupées par les drivers (111-115) ;
affichage à l'utilisateur, sur un écran, de l'au moins un driver (111-115) qui provoque l'augmentation temporelle irrégulière des ressources occupées ;
affichage à l'utilisateur, sur un écran, d'une prévision du moment où il faut s'attendre à une panne du système d'exploitation (202), compte tenu de l'augmentation temporelle irrégulière des ressources occupées ;
avertissement par voie électronique d'un dispositif de support ;
réinstallation du driver (111-115) qui est responsable de l'augmentation irrégulière des ressources occupées dans le temps ;
possibilité donnée à une instance de support d'accéder à distance à l'hôte (107) ou à l'environnement hôte pour résoudre les problèmes causés par l'occupation de ressources par les drivers (111-115) ;
avertissement par voie électronique d'une instance centrale, laquelle est conçue pour recevoir et évaluer des messages de problèmes concernant des drivers (111-115) provenant d'une pluralité de systèmes de bus de terrain ;
écriture dans un nuage (207) des informations concernant l'augmentation temporelle irrégulière des ressources occupées par les drivers (111-115), des informations concernant des problèmes avec des drivers (111-115) d'une pluralité de systèmes de bus de terrain étant collectées et évaluées dans le nuage (207) ;
détermination, pour un driver (111-115) responsable de l'augmentation temporelle irrégulière des ressources occupées, si la version installée du driver (111-115) est obsolète et, si la version installée du driver (111-115) est obsolète, guidage de l'utilisateur pour l'installation d'une version actuelle du driver (111-115) ;
détermination, pour un driver (111-115) responsable de l'augmentation temporelle irrégulière des ressources occupées, si la version installée du driver (111-115) est obsolète et, si la version installée du driver (111-115) est obsolète,
déclenchement automatique de l'installation d'une version actuelle du driver (111-115) ;
déclenchement d'un redémarrage de l'hôte (107) ou de l'environnement hôte ;
déclenchement d'un vidage d'au moins une partie de la mémoire de l'hôte (107) ou de l'environnement hôte.

13. Système de la technique d'automatisation, lequel système comprend :
un système de bus de terrain (100) avec au moins un composant de bus de terrain (101, 103, 104, 105, 106),
un dispositif d'accès aux appareils (108) installé sur un hôte (107) ou un environnement hôte, le dispositif d'accès aux appareils (108) comprenant :
une application cadre (109) ;
au moins un driver (111-115) intégré dans l'application cadre (109), lequel driver est conçu pour accéder à au moins un composant de bus de terrain (101, 103, 104, 105, 106) du système de bus de terrain (100),
**caractérisé en ce que**
le système comprend une unité de surveillance (116), laquelle est conçue pour acquérir des informations sur les ressources occupées par les drivers (111-115),
lesquelles ressources sont mises à disposition par le système d'exploitation (202) de l'hôte (107) ou de l'environnement hôte,
et, en cas de détection d'une augmentation temporelle irrégulière des ressources occupées par les drivers (111-115), pour déclencher au moins une contre-mesure prédéterminée.

14. Procédé destiné à la surveillance du fonctionnement d'un dispositif d'accès aux appareils (108) installé sur un hôte (107) ou un environnement hôte, le dispositif d'accès aux appareils (108) étant conçu pour accéder à des composants de bus de terrain (101, 103, 104, 105, 106) d'un système de bus de terrain (100), le dispositif d'accès aux appareils (108) comprenant :
une application cadre (109),
au moins un driver (111-115) intégré dans l'application cadre (109), lequel driver est conçu pour accéder à au moins un composant de bus de terrain (101, 103, 104, 105, 106) du système de bus de terrain (100), le procédé comprenant les étapes suivantes :
Saisie d'informations sur les ressources occupées par les drivers (111-115),
lesquelles ressources sont mises à disposition par le système d'exploitation (202) de l'hôte (107) ou de l'environnement hôte ;
Évaluation de l'évolution dans le temps des ressources occupées par les drivers (111-115) ;
Si une augmentation temporelle irrégulière des ressources occupées par les drivers (111-115) est déterminée, déclenchement d'au moins une contre-mesure prédéterminée.

15. Procédé selon la revendication 14, **caractérisé par** au moins une des étapes suivantes :
Récupération, auprès du système d'exploitation (202) de l'hôte (107) ou de l'environnement hôte, de paramètres indiquant une occupation par les drivers (111-115) de ressources mises à disposition par le système d'exploitation (202) ;
Détermination, à l'aide de paramètres récupérés par le système d'exploitation (202) de l'hôte (107) ou de l'environnement hôte, d'une évolution dans le temps de l'occupation de ressources par les drivers (111-115) ;
Détection, à partir d'un critère prédéfini, d'une augmentation temporelle irrégulière des ressources occupées par les drivers (111-115) ;
Comparaison d'une augmentation temporelle des ressources occupées par les drivers (111-115) à une valeur seuil prédéfinie ;
Détermination si les ressources occupées par les drivers (111-115) présentent une augmentation temporelle irrégulière, et au cas où les ressources occupées présentent une augmentation temporelle irrégulière, identification de l'au moins un driver (111-115) qui est responsable de l'augmentation temporelle irrégulière des ressources occupées.
